# EUROPÄISCHE PATENTSCHRIFT

(11) **EP 2 272 701 B1**
(45) Veröffentlichungstag und Bekanntmachung des Hinweises auf die Patenterteilung: **26.03.2014**
(21) Anmeldenummer: 10167215.2
(22) Anmeldetag: 24.06.2010
(51) Int. Cl.: B60K 6/48, B60H 1/00, B60H 1/32

(54) **Antriebseinheit für ein Elektrofahrzeug**
Drive device for an electric vehicle
Unité de propulsion pour un véhicule électrique

(30) Priorität: 03.07.2009 DE 102009031645
(43) Veröffentlichungstag der Anmeldung: 12.01.2011
(73) Patentinhaber: Schaeffler Technologies GmbH & Co. KG, 91074 Herzogenaurach (DE)
(72) Erfinder: Biermann, Thorsten, 96193 Wachenroth (DE); Bogner, Michael, 90542, Eckental (DE)

(56) Entgegenhaltungen:
- DE-U1-202005 019 438
- US-A1- 2003 100 395
- US-A1- 2006 025 260

## Beschreibung

Die vorliegende Erfindung betrifft eine Antriebseinheit für ein Elektrofahrzeug, bei welchem mindestens ein Rad durch einen Elektromotor angetrieben wird. Bei dem Elektrofahrzeug kann es sich beispielsweise um einen elektrisch angetriebenen Personenkraftwagen handeln.

Die DE 10 2006 031 278 A1 zeigt ein Mehrstufengetriebe in Planetenbauweise, welches insbesondere als Automatikgetriebe für ein Kraftfahrzeug vorgesehen ist. Das Mehrstufengetriebe umfasst eine Antriebswelle und eine Abtriebswelle sowie vier Planetenradsätze. Im Übrigen besitzt das Mehrstufengetriebe mindestens acht drehbare Wellen und fünf Schaltelemente, deren selektives Eingreifen verschiedene Übersetzungsverhältnisse zwischen der Antriebswelle und der Abtriebswelle bewirkt, wodurch acht Vorwärtsgänge und zumindest ein Rückwärtsgang realisierbar sind. Eine elektrische Maschine ist als Generator und/oder als Antriebsmaschine durch getriebliche Mittel der fünften Welle zuschaltbar.

Aus der gattungsgemäßen DE 20 2005 019 438 U1 ist eine Antriebseinheit für ein Kraftfahrzeug bekannt, die mit einem elektrischen Antriebsmotor und einem Wechselgetriebe ausgestattet ist. Im Weiteren umfasst die Antriebseinheit ein Ausgleichsgetriebe, welches ein Eingangsglied sowie ein erstes und ein zweites Ausgangsglied aufweist, die jeweils mit einer Radantriebswelle verbunden sind. Der elektrische Antriebsmotor ist über eine Getriebeantriebswelle mit einem Eingang des Wechselgetriebes verbunden. Ein Ausgang des Wechselgetriebes ist mit dem Eingangsglied des Ausgleichsgetriebes verbunden. Die Getriebeantriebswelle ist als Hohlwelle ausgebildet, durch welche eine der Radantriebswellen hindurchgeführt ist. Die Antriebsreinheit umfasst bevorzugt eine Parksperreneinrichtung, die beispielsweise dadurch gebildet ist, dass ein Sperrstift in Ausnehmungen eines Konstanten-Rades des Wechselgetriebes einschiebbar ist.

Die DE 199 53 940 A1 zeigt ein Antriebsaggregat für ein Kraftfahrzeug, welches einen verbrennungsmotorischen Fahrzeugantrieb aufweist. Es ist ein verbrennungsmotorischer Zusatzantrieb vorgesehen, mit welchem im Fahrzeug angeordnete Komponenten, wie beispielsweise ein Klimakompressor oder eine Wasserpumpe angetrieben werden können. Der verbrennungsmotorische Zusatzantrieb gewährleistet auch bei Stillstand des Fahrzeugs eine dauerhafte Energieversorgung der weiteren im Kraftfahrzeug angeordneten Komponenten.

Aus der DE 10 2004 041 161 A1 sind Klimakühlungssteuersysteme und -verfahren für Hybridfahrzeuge bekannt. Diese Hybridfahrzeuge umfassen einen Verbrennungsmotor, der gestartet und vorübergehend gestoppt werden kann. Weiterhin ist ein elektrischer Kompressormotor vorgesehen, der einen Klimakompressor antreiben kann. Hierdurch kann eine Klimaanlage des Hybridfahrzeugs auch dann betrieben werden, wenn sich das Hybridfahrzeug im Stillstand befindet und der Verbrennungsmotor gestoppt ist.

Elektrofahrzeuge sind in der Regel derart ausgeführt, dass der Elektromotor stoppt, wenn das Fahrzeug zum Stillstand kommt. Folglich kommen auch weitere Aggregate, wie beispielsweise Klimakompressoren zum Stillstand, wenn das Elektrofahrzeug steht. Hierdurch ist der Fahrgastkomfort gemindert, wenn sich das Elektrofahrzeug beispielsweise in einem Stau befindet.

Die Aufgabe der vorliegenden Erfindung besteht darin, eine Antriebseinheit für ein Elektrofahrzeug bereit zu stellen, mit welcher ein Betrieb einer Klimaanlage des Elektrofahrzeuges auch dann ermöglicht ist, wenn sich das Elektrofahrzeug im Stillstand befindet.

Die genannte Aufgabe wird durch eine Antriebseinheit gemäß dem beigefügten Anspruch 1 gelöst. Vorteilhafte Ausführungsformen der erfindungsgemäßen Antriebseinheit sind in den Unteransprüchen beschrieben.

Die erfindungsgemäße Antriebseinheit dient dem Antrieb eines Elektrofahrzeuges. Hierfür weist die Antriebseinheit mindestens einen ersten Elektromotor auf, mit welchem mindestens ein Rad des Elektrofahrzeuges angetrieben werden kann. Der erste Elektromotor kann beispielsweise dafür vorgesehen sein, die beiden Räder einer Achse des Elektrofahrzeuges über ein Differenzialgetriebe anzutreiben. Im Drehmomentfluss zwischen dem ersten Elektromotor und dem angetriebenem Rad bzw. den angetriebenen Rädern können auch weitere Getriebe wie beispielsweise ein Schaltgetriebe oder ein Überlagerungsgetriebe angeordnet sein. Erfindungsgemäß umfasst die Antriebseinheit mindestens einen ersten Klimakompressor einer Klimaanlage, der vom ersten Elektromotor antreibbar ist. Bei dem ersten Klimakompressor kann es sich beispielsweise um einen Verdichter handeln, mit welchem ein gasförmiges Kältemittel im Kreislauf der Klimaanlage verdichtet werden kann. Die Klimaanlage kann zur Kühlung einer Fahrgastzelle oder zur Kühlung von technischen Komponenten, wie beispielsweise einem Batteriepaket genutzt werden. Der erste Klimakompressor ist mechanisch antreibbar, beispielsweise dadurch, dass das Drehmoment des ersten Elektromotors unmittelbar auf den ersten Klimakompressor übertragen wird. Gemäß der Erfindung befindet sich im Drehmomentfluss zwischen dem ersten Elektromotor und dem antreibbaren Rad bzw. den antreibbaren Rädern eine erste schaltbare Kupplung. Mithilfe der ersten schaltbaren Kupplung ist es möglich, den Drehmomentfluss zwischen dem ersten Elektromotor und dem antreibbarem Rad bzw. den antreibbaren Rädern zu unterbrechen, wodurch der erste Elektromotor auch dann betrieben werden kann, wenn sich das Elektrofahrzeug im Stillstand befindet. Folglich kann der erste Klimakompressor auch im Stillstand des Fahrzeuges angetrieben werden, wodurch die Klimaanlage des Elektrofahrzeuges unabhängig davon betrieben werden kann, ob das Elektrofahrzeug fährt oder steht.

Ein besonderer Vorteil der erfindungsgemäßen Antriebseinheit besteht darin, dass durch eine einfache konstruktive Umgestaltung eine wichtige Verbesserung des Fahrgastkomforts ermöglicht ist.

Bei einer einfachen Ausführungsform der erfindungsgemäßen Antriebseinheit sind der erste Klimakompressor und der erste Elektromotor achsparallel zueinander angeordnet. Folglich sind die Antriebswelle des ersten Elektromotors und die angetriebene Welle des ersten Klimakompressors parallel zueinander ausgerichtet. Die Übertragung des Drehmoments vom ersten Elektromotor zum ersten Klimakompressor kann beispielsweise über ein einfaches Zahnradgetriebe oder ein Riemengetriebe erfolgen.

Die erfindungsgemäße Antriebseinheit umfasst bevorzugt ein Differenzialgetriebe zum Ausgleich der Drehzahlen zwischen zwei angetriebenen Rädern des Elektrofahrzeugs. Dabei handelt es sich um die beiden Räder einer Achse des Elektrofahrzeuges, zwischen denen die Antriebseinheit mit dem Differenzialgetriebe angeordnet ist. Der erste Elektromotor und der erste Klimakompressor sind jeweils koaxial auf einer ersten Abtriebswelle des Differenzialgetriebes angeordnet. Bei der ersten Abtriebswelle des Differenzialgetriebes kann es sich um eine Antriebswelle für das linke Rad oder das rechte Rad der angetriebenen Achse des Elektrofahrzeuges handeln. Die koaxiale Anordnung des ersten Elektromotors und des ersten Klimakompressors auf der ersten Abtriebswelle erfordert, dass beispielsweise die Antriebswelle des ersten Elektromotors und die angetriebene Welle des ersten Klimakompressors als Hohlwellen ausgeführt sind. Die erste schaltbare Kupplung ist ebenfalls bevorzugt koaxial auf der ersten Abtriebswelle des Differenzialgetriebes angeordnet. Die koaxiale Anordnung der genannten Komponenten erlaubt eine kompakte Ausführung der erfindungsgemäßen Antriebseinheit. Das Differenzialgetriebe kann beispielsweise als Kegelradgetriebe oder als Stirnradgetriebe ausgeführt sein. Der erste Klimakompressor ist in die das Differenzialgetriebe umfassende Antriebseinheit integriert.

Bei einer weiteren bevorzugten Ausführungsform der erfindungsgemäßen Antriebseinheit umfasst diese weiterhin einen zweiten Elektromotor zum Antrieb mindestens eines Rades des Elektrofahrzeuges. Der zweite Elektromotor steht über ein Überlagerungsgetriebe mit dem Differenzialgetriebe im Drehmomentfluss. Der zweite Elektromotor ist koaxial auf einer zweiten Abtriebswelle des Differenzialgetriebes angeordnet. Der zweite Elektromotor kann beispielsweise durch einen elektrischen Drehmomentmotor gebildet sein, mit welchem über das Überlagerungsgetriebe Torque-Vectoring-Funktionen abgebildet werden können.

Bevorzugt weist die erfindungsgemäße Antriebseinheit weiterhin einen zweiten Klimakompressor der Klimaanlage auf, der vom zweiten Elektromotor antreibbar ist und koaxial auf der zweiten Abtriebswelle des Differenzialgetriebes angeordnet ist. Im Drehmomentfluss zwischen dem zweiten Elektromotor und dem Differenzialgetriebe ist eine zweite schaltbare Kupplung angeordnet. Bei dieser Ausführungsform der erfindungsgemäßen Antriebseinheit können die beiden Elektromotoren alternativ oder gemeinsam zum Betrieb der Klimaanlage des Elektrofahrzeuges genutzt werden.

Die erste Abtriebswelle und die zweite Abtriebswelle des Differenzialgetriebes weisen bevorzugt eine gemeinsame Achse auf. Bezogen auf diese Achse ist das Differenzialgetriebe gemeinsam mit dem Überlagerungsgetriebe bevorzugt zwischen dem ersten Elektromotor und dem zweiten Elektromotor angeordnet. Hieraus ergibt sich ein symmetrischer und kompakter Aufbau. Diese Anordnung, umfassend das Differenzialgetriebe, das Überlagerungsgetriebe, den ersten Elektromotor und den zweiten Elektromotor ist weiterhin bevorzugt zwischen dem ersten Klimakompressor und dem zweiten Klimakompressor angeordnet. Hierdurch lassen sich die Drehmomente vom ersten Elektromotor zum ersten Klimakompressor sowie vom zweiten Elektromotor zum zweiten Klimakompressor unmittelbar ohne Getriebe übertragen.

Die erfindungsgemäße Antriebseinheit, umfassend den ersten Elektromotor, den zweiten Elektromotor, den ersten Klimakompressor, den zweiten Klimakompressor und das Differenzialgetriebe mit dem Überlagerungsgetriebe sowie die erste schaltbare Kupplung und die zweite schaltbare Kupplung ist bevorzugt in einem einzigen Gehäuse angeordnet. Hierdurch ist eine kompakte Antriebseinheit gebildet, in welche die Klimakompressoren integriert sind.

Bei einer weiteren bevorzugten Ausführungsform der erfindungsgemäßen Antriebseinheit ist eine dritte schaltbare Kupplung im Drehmomentfluss zwischen dem ersten Drehmomentmotor und dem ersten Klimakompressor angeordnet. Hierdurch kann der erste Klimakompressor abgeschaltet werden, wenn die Klimaanlage nicht betrieben werden soll. In gleicher Weise ist eine vierte schaltbare Kupplung im Drehmomentfluss zwischen dem zweiten Elektromotor und dem zweiten Klimakompressor angeordnet. Die vier schaltbaren Kupplungen erlauben eine beliebige Anpassung des Betriebs des ersten und des zweiten Elektromotors sowie des ersten und des zweiten Klimakompressors an die Anforderungen, die an den Antrieb des Elektrofahrzeugs und den Betrieb der Klimaanlage gestellt werden.

Die erfindungsgemäße Antriebseinheit umfasst weiterhin bevorzugt eine Parksperre, um ein Wegrollen des Elektrofahrzeuges zu vermeiden, wenn sich dieses im Stillstand befindet, insbesondere dann, wenn die erste schaltbare Kupplung ausgekuppelt ist, um einen Betrieb des ersten Klimakompressors durch den ersten Elektromotor zu ermöglichen. Bei Ausführungsformen, bei denen das Differenzialgetriebe durch ein Stirnradgetriebe mit Planetenrädern und mindestens einem Planetenradträger gebildet ist, ist die Parksperre bevorzugt derart ausgebildet, dass sie eine Blockierung einer Rotation des Planetenradträgers ermöglicht. Alternativ ist die Parksperre durch eine fünfte schaltbare Kupplung gebildet, die den Planetenradträger des Differenzialgetriebes an eine unmittelbar vom ersten Elektromotor antreibbare Welle kuppelt. Ist die fünfte schaltbare Kupplung eingekuppelt, so ist eine Rotation des Planetenradträgers gegenüber der Antriebswelle des ersten Elektromotors verhindert, wodurch letztlich jegliche Rotation des Planetenradträgers verhindert ist. Eine Blockierung der Rotation des Planetenradträgers macht eine gemeinsame Rotation der ersten Abtriebswelle und der zweiten Abtriebswelle unmöglich, sodass das Elektrofahrzeug nicht wegrollen kann.

Weitere Vorteile, Einzelheiten und Weiterbildungen der Erfindungen ergeben sich aus der nachfolgenden Beschreibung einer bevorzugten Ausführungsform der erfindungsgemäßen Antriebseinheit, unter Bezugnahme auf die Zeichnung.

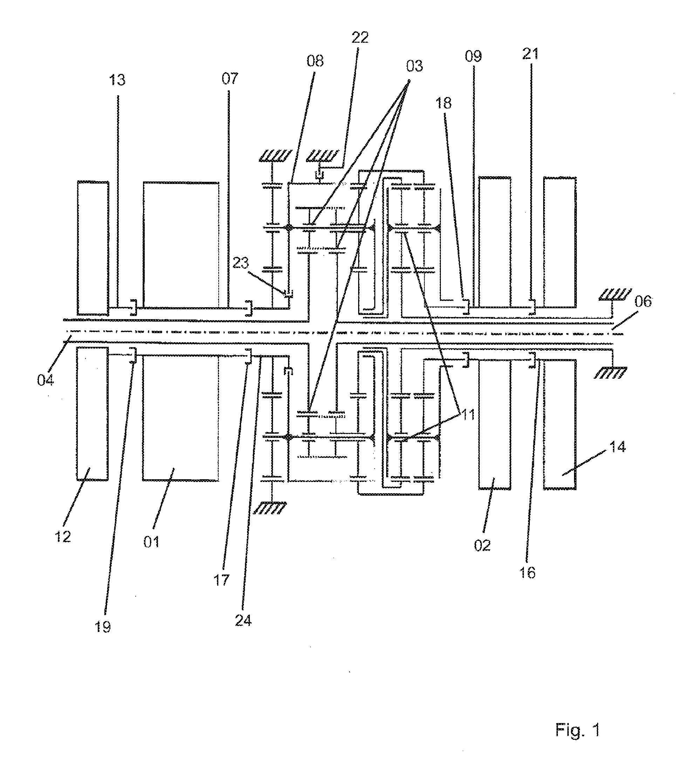

Die einzige Fig. 1 zeigt ein Getriebeschema einer bevorzugten Ausführungsform der erfindungsgemäßen Antriebseinheit zum Antrieb eines Elektrofahrzeuges. Die Antriebseinheit umfasst einen Elektromotor 01, welcher den Hauptantrieb bildet und bei der gezeigten Ausführungsform eine Leistung von 30 kW besitzt. Die Antriebseinheit umfasst weiterhin einen elektrischen Drehmomentmotor 02 mit einer Leistung von 5 kW. Mithilfe des Elektromotors 01 und des Drehmomentmotors 02 können zwei Räder (nicht gezeigt) einer Achse des Elektrofahrzeuges angetrieben werden. Die Antriebseinheit ist auf dieser Achse zwischen den beiden Rädern angeordnet. Zum Ausgleich der Drehzahlen zwischen dem linken Rad und dem rechten Rad dient ein Differenzialgetriebe 03, welches als Stirnradgetriebe ausgebildet ist. Das Differenzialgetriebe 03 weist eine erste Abtriebswelle 04 auf, mit welcher das linke Rad angetrieben werden kann. Das rechte Rad wird durch eine zweite Abtriebswelle 06 des Differenzialgetriebes 03 angetrieben.

Der Elektromotor 01 weist eine als Hohlwelle ausgeführte Antriebswelle 07 auf, durch welche ein Planetenradträger 08 der Differenzialgetriebes 03 angetrieben werden kann. Die als Hohlwelle ausgeführte Antriebswelle 07 des Elektromotors 01 ist drehbar auf der ersten Abtriebswelle 04 gelagert. In gleicher Weise weist der Drehmomentmotor 02 eine als Hohlwelle ausgeführte Antriebswelle 09 auf, über welche ein Überlagerungsgetriebe 11 angetrieben werden kann. Das Überlagerungsgetriebe 11 steht im Drehmomentfluss mit dem Differenzialgetriebe 03 und ermöglicht die Realisierung von Torque-Vectoring-Funktionen.

Die Antriebseinheit umfasst weiterhin einen ersten Klimakompressor 12, der als Verdichter einer Klimaanlage (nicht gezeigt) des Elektrofahrzeugs fungiert. Der erste Klimakompressor 12 weist eine anzutreibende Welle 13 auf, die als Hohlwelle ausgeführt ist und auf der ersten Abtriebswelle 04 drehbar gelagert ist.

Der erste Klimakompressor 12 ist bezogen auf die Achse der ersten Abtriebswelle 04 neben dem Elektromotor 01 auf dessen dem Differenzialgetriebe 03 abgewandten Seite angeordnet, wodurch die Antriebswelle 07 des Elektromotors 01 unmittelbar ein Drehmoment auf die anzutreibende Welle 13 des ersten Klimakompressors 12 übertragen kann. Folglich lässt sich das vom Elektromotor 01 erzeugte Drehmoment sowohl auf das Differenzialgetriebe 03 als auch auf den ersten Klimakompressor 12 übertragen. Die erfindungsgemäße Antriebseinheit umfasst weiterhin einen zweiten Klimakompressor 14, der bezogen auf die Achse der zweiten Abtriebswelle 06 seitlich neben dem Drehmomentmotor 02 auf dessen dem Überlagerungsgetriebe 11 abgewandten Seite angeordnet ist. Der zweite Klimakompressor 14 weist eine anzutreibende Welle 16 auf, die als Hohlwelle ausgeführt ist und drehbar auf der zweiten Abtriebswelle 06 gelagert ist. Folglich kann ein Drehmoment, welches vom Drehmomentmotor 02 erzeugt wird, über dessen Antriebswelle 09 direkt auf die anzutreibende Welle 16 des zweiten Klimakompressors 14 übertragen werden. Damit kann der Drehmomentmotor 02 sowohl zum Antrieb des Elektrofahrzeugs über das Überlagerungsgetriebe 11 als auch zum Antrieb des zweiten Klimakompressors 14 genutzt werden.

Die Antriebswelle 07 des Elektromotors 01 ist über eine erste schaltbare Kupplung 17 mit dem Differenzialgetriebe 03 verbunden. Folglich kann der Elektromotor 01 auch dann betrieben werden, wenn das Elektrofahrzeug nicht angetrieben werden soll. Hierfür ist die erste schaltbare Kupplung 17 auszukuppeln. Der Elektromotor 01 kann dann zum Betrieb des ersten Klimakompressors 12 genutzt werden. In gleicher Weise ist zwischen der Antriebswelle 09 des Drehmomentmotors 02 und dem Überlagerungsgetriebe 11 eine zweite schaltbare Kupplung 18 angeordnet. Hierdurch kann der Drehmomentmotor 02 auch dann betrieben werden, wenn das Elektrofahrzeug nicht angetrieben werden soll. Hierfür ist die zweite schaltbare Kupplung 18 auszukuppeln. Der Drehmomentmotor 02 kann dann zum Betrieb des zweiten Klimakompressors 14 genutzt werden.

Sollen der Elektromotor 01 und der Drehmomentmotor 02 zum Antrieb des Elektrofahrzeugs betrieben werden, so sind die erste schaltbare Kupplung 17 und die zweite schaltbare Kupplung 18 einzukuppeln. Der Elektromotor 01 und der Drehmomentmotor 02 treiben dann auch den ersten Klimakompressor 12 und den zweiten Klimakompressor 14 an. Insofern jedoch der Betrieb der Klimaanlage, das heißt ein Antrieb des ersten Klimakompressors 12 und des zweiten Klimakompressors 14 nicht gewünscht ist, so ist eine dritte schaltbare Kupplung 19, welche im Drehmomentfluss zwischen dem Elektromotor 01 und dem ersten Klimakompressor 12 angeordnet ist, auszukuppeln. In gleicher Weise ist eine vierte schaltbare Kupplung 21, welche im Drehmomentfluss zwischen dem Drehmomentmotor 02 und dem zweiten Klimakompressor 14 angeordnet ist, auszukuppeln. Die dritte schaltbare Kupplung 19 verbindet unmittelbar die Antriebswelle 07 des Elektromotors 01 mit der anzutreibenden Welle 13 des ersten Klimakompressors 12. Die vierte schaltbare Kupplung 21 verbindet unmittelbar die Antriebswelle 09 des Drehmomentmotors 02 mit der anzutreibenden Welle 16 des zweiten Klimakompressors 14.

Die erfindungsgemäße Antriebseinheit umfasst weiterhin eine Parksperre 22, mit der verhindert werden kann, dass das Elektrofahrzeug wegrollt, wenn es nicht durch den Elektromotor 01 und den Drehmomentmotor 02 angetrieben wird. Die Parksperre 22 verhindert ein Wegrollen des Elektrofahrzeugs insbesondere auch dann, wenn die erste schaltbare Kupplung 17 und die zweite schaltbare Kupplung 18 ausgekuppelt sind und der Elektromotor 01 und/oder der Drehmomentmotor 02 betrieben werden. Dies ist dann der Fall, wenn sich das Elektrofahrzeug im Stand befindet und der erste Klimakompressor und der zweite Klimakompressor 14 durch den Elektromotor 01 und den Drehmomentmotor 02 angetrieben werden, um die Klimaanlage des Fahrzeugs zu betreiben. Die Parksperre 22 blockiert den Planetenradträger 08, sodass dieser nicht rotieren kann. Die Funktion einer Parksperre kann alternativ oder ergänzend auch durch eine fünfte schaltbare Kupplung 23 realisiert werden. Die fünfte schaltbare Kupplung 23 befindet sich zwischen dem Planetenradträger 08 und einer über die erste schaltbare Kupplung 17 mit der Antriebswelle 07 des Elektromotors 01 verbundene Zwischenwelle 24. Der Planetenradträger 08 rotiert gegenüber der Zwischenwelle 24, sobald dieser vom Elektromotor 01 angetrieben wird oder sobald sich die erste Abtriebswelle 04 und die zweite Abtriebswelle 06 gemeinsam drehen. Folglich muss die fünfte schaltbare Kupplung 23 ausgekuppelt sein, damit das Elektrofahrzeug bewegt werden kann. Sobald die fünfte schaltbare Kupplung 23 eingekuppelt ist, ist eine Rotation des Planetenradträgers 08 verhindert, wodurch gleichzeitig eine gemeinsame Rotation der ersten Abtriebswelle 04 und der zweiten Abtriebswelle 06 verhindert ist. Folglich kann das Elektrofahrzeug nicht wegrollen. Die Funktion der Parksperre kann aber auch durch andere Blockierelemente oder schaltbare Kupplungen innerhalb der erfindungsgemäßen Antriebseinheit realisiert werden.

### Bezugszeichenliste:

- 01: Elektromotor
- 02: Drehmomentmotor
- 03: Differenzialgetriebe
- 04: erste Abtriebswelle
- 05: -
- 06: zweite Abtriebswelle
- 07: Antriebswelle des Elektromotors
- 08: Planetenradträger
- 09: Antriebswelle des Drehmomentmotors
- 10: -
- 11: Überlagerungsgetriebe
- 12: erster Klimakompressor
- 13: anzutreibende Welle des erster Klimakompressors
- 14: zweiter Klimakompressor
- 15: -
- 16: anzutreibende Welle des zweiten Klimakompressors
- 17: erste schaltbare Kupplung
- 18: zweite schaltbare Kupplung
- 19: dritte schaltbare Kupplung
- 20: -
- 21: vierte schaltbaren Kupplung
- 22: Parksperre
- 23: fünfte schaltbare Kupplung
- 24: Zwischenwelle

## Patentansprüche

1. Antriebseinheit für ein Elektrofahrzeug mit einem ersten Elektromotor (01) zum Antrieb mindestens eines Rades des Elektrofahrzeuges, **dadurch gekennzeichnet, dass** sie weiterhin einen ersten Klimakompressor (12) einer Klimaanlage umfasst, der vom ersten Elektromotor (01) antreibbar ist, wobei im Drehmomentfluss zwischen dem ersten Elektromotor (01) und dem antreibbaren Rad eine erste schaltbare Kupplung (17) angeordnet ist.

2. Antriebseinheit nach Anspruch 1, **dadurch gekennzeichnet, dass** der erste Klimakompressor (12) und der ersten Elektromotor (01) achsparallel zueinander angeordnet sind.

3. Antriebseinheit nach Anspruch 1, **dadurch gekennzeichnet, dass** sie weiterhin ein Differenzialgetriebe (03) zum Ausgleich der Drehzahlen zwischen zwei angetriebenen Rädern des Elektrofahrzeuges umfasst, wobei der erste Elektromotor (01) und der erste Klimakompressor (12) jeweils koaxial auf einer ersten Abtriebswelle (04) des Differenzialgetriebes (03) angeordnet sind.

4. Antriebseinheit nach Anspruch 3, **dadurch gekennzeichnet, dass** sie weiterhin einen zweiten Elektromotor (02) zum Antrieb mindestens eines Rades des Elektrofahrzeuges sowie ein Überlagerungsgetriebe (11) umfasst, wobei der zweite Elektromotor (02) über das Überlagerungsgetriebe (11) im Drehmomentfluss mit dem Differenzialgetriebe (03) steht und koaxial auf einer zweiten Abtriebswelle (06) des Differenzialgetriebes (3) angeordnet ist.

5. Antriebseinheit nach Anspruch 4, **dadurch gekennzeichnet, dass** der zweite Elektromotor durch einen elektrischen Drehmomentmotor (02) gebildet ist.

6. Antriebseinheit nach Anspruch 4 oder 5, **dadurch gekennzeichnet, dass** sie weiterhin einen zweiten Klimakompressor (14) der Klimaanlage umfasst, der vom zweiten Elektromotor (02) antreibbar ist und koaxial auf der zweiten Abtriebswelle (06) des Differenzialgetriebes (03) angeordnet ist, wobei im Drehmomentfluss zwischen dem zweiten Elektromotor (02) und dem Differentialgetriebe (03) eine zweite schaltbare Kupplung (18) angeordnet ist.

7. Antriebseinheit nach Anspruch 6, **dadurch gekennzeichnet, dass** bezogen auf eine gemeinsame Achse der ersten Abtriebswelle (04) und der zweiten Abtriebswelle (06) des Differenzialgetriebes (03) das Differenzialgetriebe (03) gemeinsam mit dem Überlagerungsgetriebe (11) zwischen dem ersten Elektromotor (01) und dem zweiten Elektromotor (02) angeordnet ist.

8. Antriebseinheit nach Anspruch 7, **dadurch gekennzeichnet, dass** bezogen auf die gemeinsame Achse der ersten Abtriebswelle (04) und der zweiten Abtriebswelle (06) des Differenzialgetriebes (03) das Differenzialgetriebe (03) gemeinsam mit dem Überlagerungsgetriebe (11), dem ersten Elektromotor (01) und dem zweiten Elektromotor (02) zwischen dem ersten Klimakompressor (12) und dem zweiten Klimakompressor (14) angeordnet ist.

9. Antriebseinheit nach einem der Ansprüche 4 bis 8, **dadurch gekennzeichnet, dass** das Differenzialgetriebe (03) gemeinsam mit dem Überlagerungsgetriebe (11), dem ersten Elektromotor (01), dem zweiten Elektromotor (02), dem ersten Klimakompressor (12) und dem zweiten Klimakompressor (14) in einem Gehäuse angeordnet ist.

10. Antriebseinheit nach einem der Ansprüche 3 bis 9, **dadurch gekennzeichnet, dass** im Drehmomentfluss zwischen dem ersten Elektromotor (01) und dem ersten Klimakompressor (12) eine dritte schaltbare Kupplung (19) angeordnet ist.

11. Antriebseinheit nach Anspruch 4 oder einem auf diesen rückbezogenen
Anspruch, **dadurch gekennzeichnet, dass** im Drehmomentfluss zwischen dem zweiten Elektromotor (02) und dem zweiten Klimakompressor (14) eine vierte schaltbare Kupplung (21) angeordnet ist.

12. Antriebseinheit nach einem der Ansprüche 3 bis 11, **dadurch gekennzeichnet, dass** sie weiterhin eine Parksperre (22) umfasst, mit welcher eine Rotation eines Planetenradträgers (08) des Differenzialgetriebes (03) blockierbar ist.

13. Antriebseinheit nach einem der Ansprüche 3 bis 11, **dadurch gekennzeichnet, dass** sie weiterhin eine Parksperre umfasst, die durch eine fünfte schaltbare Kupplung (23) gebildet ist, die einen Planetenradträger (08) des Differenzialgetriebes (03) an eine unmittelbar vom ersten Elektromotor (01) antreibbare Welle (24) kuppelt.

## Claims

1. Drive device for an electric vehicle, with a first electric motor (01) for driving at least one wheel of the electric vehicle, **characterized in that** it comprises, furthermore, a first air-conditioning compressor (12) of an air-conditioning system, which air-conditioning compressor is capable of being driven by the first electric motor (01), a first shiftable clutch (17) being arranged in the torque flux between the first electric motor (01) and the drivable wheel.

2. Drive device according to Claim 1, **characterized in that** the first air-conditioning compressor (12) and the first electric motor (01) are arranged axially parallel to one another.

3. Drive device according to Claim 1, **characterized in that** it comprises, furthermore, a differential gear (03) for equalizing the rotational speeds between two driven wheels of the electric vehicle, the first electric motor (01) and the first air-conditioning compressor (12) being arranged in each case coaxially on a first output shaft (04) of the differential gear (03).

4. Drive device according to Claim 3, **characterized in that** it comprises, furthermore, a second electric motor (02) for driving at least one wheel of the electric vehicle and also a variable-ratio gear (11), the second electric motor (02) standing in the torque flux with the differential gear (03) via the variable-ratio gear (11) and being arranged coaxially on the second output shaft (06) of the differential gear (3).

5. Drive device according to Claim 4, **characterized in that** the second electric motor is formed by an electric torque motor (02).

6. Drive device according to Claim 4 or 5, **characterized in that** it comprises, furthermore, a second air-conditioning compressor (14) of the air-conditioning system, which second air-conditioning compressor is capable of being driven by the second electric motor (02) and is arranged coaxially on the second output shaft (06) of the differential gear (03), a second shiftable clutch (18) being arranged in the torque flux between the second electric motor (02) and the differential gear (03).

7. Drive device according to Claim 6, **characterized in that**, with respect to a common axis of the first output shaft (04) and of the second output shaft (06) of the differential gear (03), the differential gear (03) is arranged together with the variable-ratio gear (11) between the first electric motor (01) and the second electric motor (02).

8. Drive device according to Claim 7, **characterized in that**, with respect to the common axis of the first output shaft (04) and of the second output shaft (06) of the differential gear (03), the differential gear (03) is arranged together with the variable-ratio gear (11), with the first electric motor (01) and with the second electric motor (02) between the first air-conditioning compressor (12) and the second air-conditioning compressor (14).

9. Drive device according to one of Claims 4 to 8, **characterized in that** the differential gear (03) is arranged together with the variable-ratio gear (11), with the first electric motor (01), with the second electric motor (02), with the first air-conditioning compressor (12) and with the second air-conditioning compressor (14) in a housing.

10. Drive device according to one of Claims 3 to 9, **characterized in that** a third shiftable clutch (19) is arranged in the torque flux between the first electric motor (01) and the first air-conditioning compressor (12).

11. Drive device according to Claim 4 or a claim referred back to this, **characterized in that** a fourth shiftable clutch (21) is arranged in the torque flux between the second electric motor (02) and the second air-conditioning compressor (14).

12. Drive device according to one of Claims 3 to 11, **characterized in that** it comprises, furthermore, a parking lock (22), by means of which rotation of a planet-wheel carrier (08) of the differential gear (03) can be blocked.

13. Drive device according to one of Claims 3 to 11, **characterized in that** it comprises, furthermore, a parking lock formed by a fifth shiftable clutch (23) which couples a planet-wheel carrier (08) of the differential gear (03) to a shaft (24) capable of being driven directly by the first electric motor (01).

## Revendications

1. Unité de propulsion pour un véhicule électrique, comprenant un premier moteur électrique (01) pour l'entraînement d'au moins une roue du véhicule électrique, **caractérisée en ce qu'**elle comporte en outre un premier compresseur de climatisation (12) d'un système de climatisation, lequel premier compresseur de climatisation peut être entraîné par le premier moteur électrique (01), un premier embrayage commutable (17) étant disposé dans le flux de couple entre le premier moteur électrique (01) et la roue pouvant être entraînée.

2. Unité de propulsion selon la revendication 1, **caractérisée en ce que** le premier compresseur de climatisation (12) et le premier moteur électrique (01) sont disposés avec leurs axes parallèles l'un à l'autre.

3. Unité de propulsion selon la revendication 1, **caractérisée en ce qu'**elle comporte en outre un engrenage différentiel (03) pour égaliser les vitesses de rotation entre deux roues entraînées du véhicule électrique, le premier moteur électrique (01) et le premier compresseur de climatisation (12) étant respectivement disposés de manière coaxiale sur un premier arbre de sortie (04) de l'engrenage différentiel (03).

4. Unité de propulsion selon la revendication 3, **caractérisée en ce qu'**elle comporte en outre un deuxième moteur électrique (02) pour l'entraînement d'au moins une roue du véhicule électrique ainsi qu'une transmission à superposition (11), le deuxième moteur électrique (02) étant, par le biais de la transmission à superposition (11), dans le flux de couple avec l'engrenage différentiel (03) et étant disposé de manière coaxiale sur un deuxième arbre de sortie (06) de l'engrenage différentiel (3).

5. Unité de propulsion selon la revendication 4, **caractérisée en ce que** le deuxième moteur électrique est formé par un moteur-couple électrique (02).

6. Unité de propulsion selon la revendication 4 ou 5, **caractérisée en ce qu'**elle comporte en outre un deuxième compresseur de climatisation (14) du système de climatisation, lequel deuxième compresseur de climatisation peut être entraîné par le deuxième moteur électrique (02) et est disposé de manière coaxiale sur le deuxième arbre de sortie (06) de l'engrenage différentiel (03), un deuxième embrayage commutable (18) étant disposé dans le flux de couple entre le deuxième moteur électrique (02) et l'engrenage différentiel (03).

7. Unité de propulsion selon la revendication 6, **caractérisée en ce que**, par rapport à un axe commun du premier arbre de sortie (04) et du deuxième arbre de sortie (06) de l'engrenage différentiel (03), l'engrenage différentiel (03) est disposé, conjointement avec la transmission à superposition (11), entre le premier moteur électrique (01) et le deuxième moteur électrique (02).

8. Unité de propulsion selon la revendication 7, **caractérisée en ce que**, par rapport à l'axe commun du premier arbre de sortie (04) et du deuxième arbre de sortie (06) de l'engrenage différentiel (03), l'engrenage différentiel (03) est disposé, conjointement avec la transmission à superposition (11), le premier moteur électrique (01) et le deuxième moteur électrique (02), entre le premier compresseur de climatisation (12) et le deuxième compresseur de climatisation (14).

9. Unité de propulsion selon l'une quelconque des revendications 4 à 8, **caractérisée en ce que** l'engrenage différentiel (03) est disposé, conjointement avec la transmission à superposition (11), le premier moteur électrique (01), le deuxième moteur électrique (02), le premier compresseur de climatisation (12) et le deuxième compresseur de climatisation (14), dans un boîtier.

10. Unité de propulsion selon l'une quelconque des revendications 3 à 9, **caractérisée en ce qu'**un troisième embrayage commutable (19) est disposé dans le flux de couple entre le premier moteur électrique (01) et le premier compresseur de climatisation (12).

11. Unité de propulsion selon la revendication 4 ou selon une revendication se rapportant à celle-ci, **caractérisée en ce qu'**un quatrième embrayage commutable (21) est disposé dans le flux de couple entre le deuxième moteur électrique (02) et le deuxième compresseur de climatisation (14).

12. Unité de propulsion selon l'une quelconque des revendications 3 à 11, **caractérisée en ce qu'**elle comporte en outre un mécanisme de verrouillage de stationnement (22), à l'aide duquel une rotation d'un porte-satellites (08) de l'engrenage différentiel (03) peut être bloquée.

13. Unité de propulsion selon l'une quelconque des revendications 3 à 11, **caractérisée en ce qu'**elle comporte en outre un mécanisme de verrouillage de stationnement qui est formé par un cinquième embrayage commutable (23) qui accouple un porte-satellites (08) de l'engrenage différentiel (03) à un arbre (24) pouvant être entraîné directement par le premier moteur électrique (01).
